# EUROPEAN PATENT APPLICATION

(11) **EP 4 459 139 A1**
(43) Date of publication of application: **06.11.2024**
(21) Application number: 22916181.5
(22) Date of filing: 28.12.2022
(51) Int. Cl.: F16B 35/00, F16B 39/24, F16B 7/18, F01N 13/08, F16L 23/02, F16L 23/036

(54) **FASTENING MEMBER**

(30) Priority: 28.12.2021 JP 2021214835
(71) Applicant: Topura Co., Ltd., Kanagawa 257-0031 (JP)
(72) Inventor: YAMAMOTO, Shinya, Hadano-shi, Kanagawa 257-0031 (JP); SUZUKI, Hiroshi, Hadano-shi, Kanagawa 257-0031 (JP); MATSUNO, Mayumi, Hadano-shi, Kanagawa 257-0031 (JP); KOBAYASHI, Masanari, Fujisawa-shi, Kanagawa 252-0811 (JP); OKAWA, Takenori, Fujisawa-shi, Kanagawa 252-0811 (JP); ENDO, Kei, Fujisawa-shi, Kanagawa 252-0811 (JP); KITAHARA, Daisuke, Fujisawa-shi, Kanagawa 252-0811 (JP)
(74) Representative: Hoffmann Eitle
(86) International application number: PCT/JP2022/048633
(87) International publication number: WO 2023/127959

(57) **Abstract**

The present invention provides a fastening member that is an assembly of a coil spring on a fastening main body section, in which the fastening main body section includes a threaded section that is to be coupled to a coupling target, a shaft section that extends from one end of the threaded section, a head section that is provided on a side of the shaft section opposite to the threaded section side and has a maximum diameter greater than an inner diameter of the coil spring, a stepped section that is provided between the shaft section and the head section, and a locking section that is provided in the stepped section or the head section and locks the coil spring, and the coil spring is inserted into the shaft section and the stepped section, and is locked to the locking section.

## Description

### Field

The present invention relates to a fastening member.

### Background

In the related art, an exhaust system of an automobile or the like includes an exhaust manifold directly connected to an engine, and an exhaust pipe provided downstream thereof (for example, see Patent Literature 1). The exhaust pipe is divided into a plurality of pipes as necessary, and the pipes are connected by seal bearings, flanges, bolts, and the like. A coil spring is provided between a head section of a bolt and a flange of a pipe to absorb change in load of a connection portion of pipes in a case where the connection portion is bent.

### Citation List

### Patent Literature

Patent Literature 1: JP 6591791 B

### Summary

### Technical Problem

Because the bolt and the coil spring in the related art are configured separately, it is necessary to assemble the two parts preliminarily. In this case, there is a problem in that it is difficult for a worker to perform work since the worker performs work in a state of having a tool or a pipe.

The present invention has been made in view of the foregoing, and an object of the present invention is to provide a fastening member capable of improving workability in connecting pipes.

### Solution to Problem

To solve the above-described problem and achieve the object, a fastening member according to the present invention includes: a fastening main body section; and a coil spring assembled with the fastening main body section, wherein the fastening main body section includes a threaded section configured to be coupled to a coupling target, a shaft section extending from one end of the threaded section, a head section provided on a side of the shaft section opposite to the threaded section side, the head section having a maximum diameter greater than an inner diameter of the coil spring, a stepped section provided between the shaft section and the head section, and a locking section provided in the stepped section or the head section and configured to lock the coil spring, and the coil spring is configured to be inserted into the shaft section and the stepped section, and be locked to the locking section.

Moreover, in the above-described fastening member according to the present invention, the shaft section includes a threaded section configured to be screwed to another fastening member in an end portion on a side opposite to the stepped section side, and an intermediate brim section positioned between the stepped section and the shaft section and at least partially inside the coil spring and configured to protrude with a diameter smaller than the inner diameter of the coil spring.

Moreover, in the above-described fastening member according to the present invention, the locking section is an annular protrusion extending in a circumferential direction of the stepped section.

Moreover, in the above-described fastening member according to the present invention, the locking section is one or a plurality of protrusions intermittently provided in a circumferential direction of the stepped section.

Moreover, in the above-described fastening member according to the present invention, the plurality of protrusions are positioned at equal intervals in the circumferential direction of the stepped section.

Moreover, in the above-described fastening member according to the present invention, the locking section is provided separately from the stepped section and extends in a circumferential direction of the stepped section.

Moreover, in the above-described fastening member according to the present invention, the locking section is provided in the head section and includes a claw portion configured to be locked with the coil spring.

Moreover, in the above-described fastening member according to the present invention, the coil spring is formed by winding a wire, and a protrusion section of the stepped section is provided at a position corresponding to a third turn or less of the coil spring from the head section side in a longitudinal direction of the fastening main body section.

Moreover, in the above-described fastening member according to the present invention, the coil spring is configured to freely rotate with respect to the fastening main body section.

Moreover, in the above-described fastening member according to the present invention, the fastening member is configured to form a part of an exhaust pipe spherical joint structure for fastening a first pipe and a second pipe configuring an exhaust pipe of a vehicle. Advantageous Effects of Invention

According to the present invention, workability in connecting pipes can be improved.

### Brief Description of Drawings

FIG. 1 is a diagram illustrating an example of a connection aspect of an engine and mufflers using a fastening member according to an embodiment of the present invention.
FIG. 2 is a diagram (first view) illustrating a connection portion of pipes using the fastening member according to the embodiment of the present invention.
FIG. 3 is a diagram (second view) illustrating the connection portion of the pipes using the fastening member according to the embodiment of the present invention.
FIG. 4 is an exploded perspective view illustrating the connection portion of the pipes using the fastening member according to the embodiment of the present invention.
FIG. 5 is a plan view illustrating a configuration of the fastening member according to the embodiment of the present invention.
FIG. 6 is a plan view illustrating a configuration of a fastening main body section of the fastening member according to the embodiment of the present invention.
FIG. 7 is a cross-sectional view taken along line A-A in FIG. 6.
FIG. 8 is a plan view illustrating a configuration of a fastening main body section of a fastening member according to Modification Example 1 of the embodiment of the present invention.
FIG. 9 is a cross-sectional view taken along line B-B in FIG. 8.
FIG. 10 is a plan view illustrating a configuration of a fastening main body section of a fastening member according to Modification Example 2 of the embodiment of the present invention.
FIG. 11 is a cross-sectional view taken along line C-C in FIG. 10.
FIG. 12 is a plan view illustrating a configuration of a fastening main body section of a fastening member according to Modification Example 3 of the embodiment of the present invention.
FIG. 13 is a cross-sectional view taken along line D-D in FIG. 12.
FIG. 14 is a plan view illustrating a configuration of a fastening main body section of a fastening member according to Modification Example 4 of the embodiment of the present invention.
FIG. 15 is a plan view illustrating a configuration of a fastening main body section of a fastening member according to Modification Example 5 of the embodiment of the present invention.
FIG. 16 is a plan view illustrating a configuration of a fastening main body section of a fastening member according to Modification Example 6 of the embodiment of the present invention.
FIG. 17 is a plan view illustrating a configuration of a fastening main body section of a fastening member according to Modification Example 7 of the embodiment of the present invention.
FIG. 18 is a plan view illustrating a configuration of a fastening main body section of a fastening member according to Modification Example 8 of the embodiment of the present invention.

### Description of Embodiments

A mode (hereinafter, referred to as an "embodiment") for carrying out the present invention will be described hereinafter with reference to the accompanying drawings. The drawings are schematic drawings, and the relation between the thickness and the width of each portion, the ratio of thickness of the portions, and the like may be different from actual ones. The drawings may include portions having the relation and the ratio of sizes different between the drawings.

### (Embodiment)

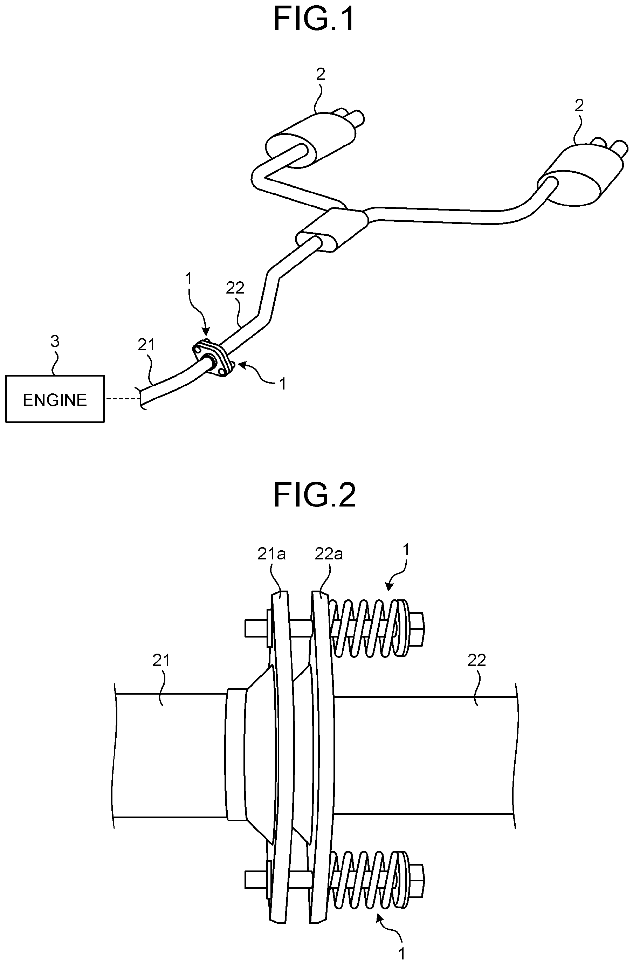

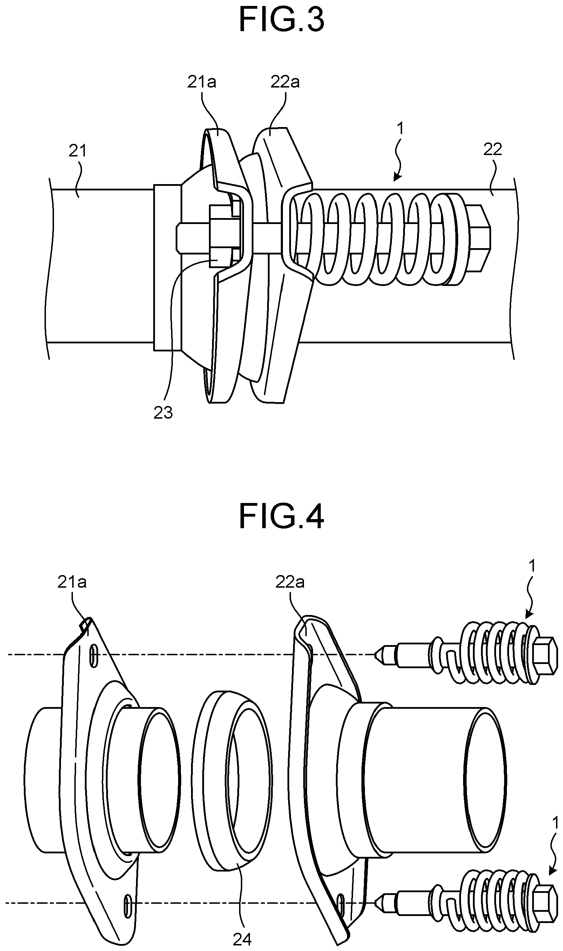

FIG. 1 is a diagram illustrating an example of a connection aspect of an engine and mufflers using a fastening member according to an embodiment of the present invention. FIGS. 2 and 3 are diagrams illustrating a connection portion of pipes using the fastening member according to the embodiment of the present invention. FIG. 4 is an exploded perspective view illustrating the connection portion of the pipes using the fastening member according to the embodiment of the present invention.

Mufflers 2 are connected to an engine 3 by way of an exhaust manifold and an exhaust pipe (see FIG. 1). The exhaust pipe is formed by connecting a plurality of pipes (in the present embodiment, a first pipe 21 and a second pipe 22). The first pipe 21 and the second pipe 22 are fastened by coupling fastening members 1 and nuts 23 (see FIG. 3) to flanges 21a and 22a formed in the respective pipes. An exhaust pipe spherical joint structure is configured by the first pipe 21, the second pipe 22, the fastening members 1, and the nuts 23.

A seal bearing 24 is interposed between the first pipe 21 and the second pipe 22. The first pipe 21 and the second pipe 22 are freely bent by the seal bearing 24 while maintaining an air-tight state inside the connection portion.

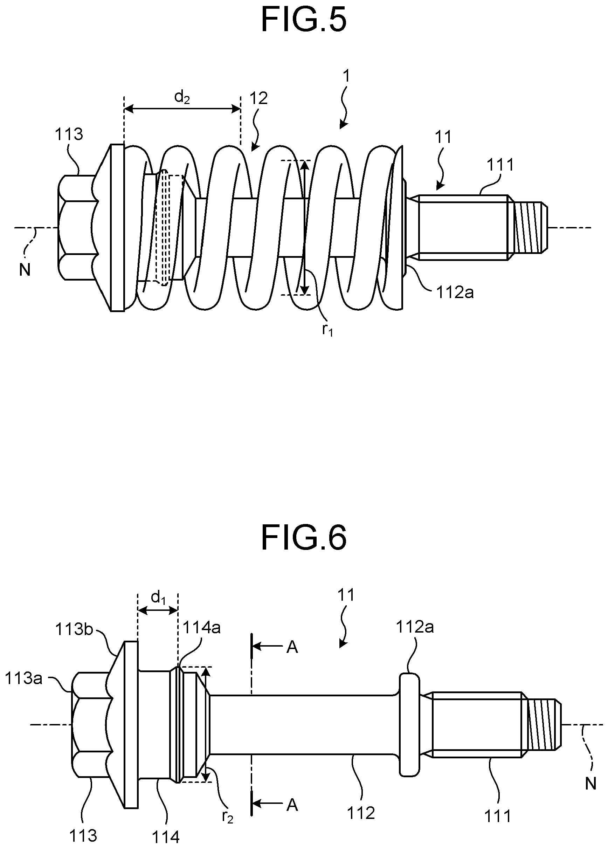

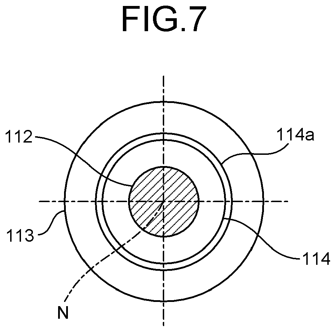

Subsequently, a configuration of the fastening member 1 will be described. FIG. 5 is a plan view illustrating the configuration of the fastening member according to the embodiment of the present invention. FIG. 6 is a plan view illustrating a configuration of a fastening main body section of the fastening member according to the embodiment of the present invention. FIG. 7 is a cross-sectional view taken along line A-A in FIG. 6.

The fastening member 1 includes a fastening main body section 11 and a coil spring 12. In the present embodiment, description will be provided assuming that a central axis of the fastening main body section 11 and a central axis of the coil spring 12 are aligned with an axis N as a longitudinal axis of the fastening member 1. An axis N direction may be referred to as a longitudinal direction.

The fastening main body section 11 has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114 that is provided between the shaft section 112 and the head section 113. A diameter (maximum diameter) of the fastening main body section 11 in a direction perpendicular to the longitudinal direction is greater in an order of the threaded section 111, the shaft section 112, the stepped section 114, and the head section 113.

The shaft section 112 has an intermediate brim section 112a that protrudes in a radial direction with respect to other portions of the shaft section 112, in an end portion on the threaded section 111 side. In the present embodiment, although an example where the intermediate brim section 112a is provided on the threaded section 111 side of the shaft section 112 has been described, the intermediate brim section 112a may be provided between the threaded section 111 and the stepped section 114. A coupling aspect is not limited to the threaded section 111 and the nut 23, and for example, as a coupling member by riveting, a configuration in which a leg section is substituted with the fastening member 1 and a head section is substituted with the nut 23 may be made.

The head section 113 has a hexagonal section 113a and a brim section 113b. A maximum diameter of the brim section 133b is greater than an inner diameter of the coil spring 12. A shape of the hexagonal section 113a of the head section 113 is not limited to a hexagonal shape. In a case where the maximum diameter of the brim section 133b satisfies the above-described relation, and the head section 113 can lock the coil spring 12, the brim section 113b (a maximum diameter of the head section 113) may be smaller than an outer diameter of the coil spring 12.

The stepped section 114 has a protrusion section 114a that protrudes in a radial direction with respect to other portions of the stepped section 114. The protrusion section 114a is an annular protrusion that is formed along one cycle in a circumferential direction of the stepped section 114, and extends in the circumferential direction. In the stepped section 114, a diameter of a portion excluding the protrusion section 114a is smaller than the inner diameter of the coil spring 12. That is, the stepped section 114 has a stepped section main body smaller than the inner diameter of the coil spring 12, and a protrusion that protrudes from the stepped section main body. In the present specification, the "protrusion section" corresponds to a locking section.

The coil spring 12 is formed by winding a wire, and both end portions thereof have a plane perpendicular to an axial direction (here, the longitudinal direction of the coil spring 12) extending by winding.

Here, a diameter r₂ of the protrusion section 114a is greater than an inner diameter r₁ of the coil spring 12. For example, the diameter r₂ is set to be equal to or greater than 101% and equal to or less than 105% with respect to the inner diameter r₁. In this case, in a case where a ratio of the diameter r₂ to the inner diameter r₁ is less than 101%, a press-fit margin into the coil spring 12 is decreased, and the coil spring 12 may be separated from the fastening main body section 11. On the other hand, in a case where the ratio of the diameter r₂ to the inner diameter r₁ exceeds 105%, the press-fit margin into the coil spring 12 is increased, interference between the coil spring 12 and the protrusion section 114a is increased, and in attaching the fastening member 1 to the flanges 21a and 22a, the coil spring 12 may be twisted and damaged.

In the protrusion section 114a, a rising angle from the shaft section 112 side, that is, a rising angle with respect to a plane perpendicular to the axis N is set in consideration of a use aspect of a tool used for forming the protrusion section or suppressing deformation of the stepped section in forming the protrusion section.

The protrusion section 114a is preferably positioned in first to third turns (a position corresponding to the third turn or less) of the coil spring 12 in a natural state in which no load other than gravity is applied to the coil spring 12, from the head section 113 side from a viewpoint of achieving both anti-falling and securing of stretchability of the coil spring 12. For example, the protrusion section 114a is preferably formed in such a manner that a distance d₁ in the axis N direction from the head section 113 is equal to or less than a distance d₂ to a position passing through a third wire in an extension direction (here, the axis N direction) according to winding of the coil spring 12.

A diameter of the intermediate brim section 112a is smaller than the inner diameter of the coil spring 12, and is, for example, equal to or greater than 80% and less than 100% with respect to the inner diameter of the coil spring 12.

At least a part of the intermediate brim section 112a is positioned in the coil spring 12 in the natural state of the coil spring 12.

The fastening member 1 is formed by inserting the fastening main body section 11 into the coil spring 12. When the fastening main body section 11 is inserted into the coil spring 12 during assembling, the protrusion section 114a is press-fitted into the coil spring 12. The coil spring 12 can be brought into contact with a surface of the head section 113 (brim section 113b) on the stepped section 114 side according to the applied load.

In a state in which the coil spring 12 is assembled with the fastening main body section 11 (see FIG. 5), the coil spring 12 can rotate with respect to the fastening main body section 11, and is locked to the protrusion section 114a to be retained to the fastening main body section 11. The coil spring 12 is brought into contact with the intermediate brim section 112a in a case of being inclined with respect to the shaft section 112, so that the inclination with respect to the shaft section 112 is suppressed. In a case where the inclination of the coil spring 12 is suppressed by the intermediate brim section 112a, a locking state of the coil spring 12 and the protrusion section 114a can be reliably maintained.

The fastening member 1 fastens the flanges 21a and 22a by inserting the shaft section 112 into the flanges 21a and 22a and making the shaft section 112 to be screwed with the nut 23. In this case, the coil spring 12 is disposed between the head section 113 of the fastening main body section 11 and the flange 22a of the second pipe 22. Accordingly, even in a case where the connection portion of the pipes is bent, change in load to the flange is absorbed by stretching of the coil spring 12, and a state where the flanges 21a and 22a are brought into press-contact with each other can be maintained.

In the embodiment of the present invention described above, the protrusion section 114a that protrudes in the radial direction of the fastening main body section 11 is provided on the head section 113 side of the fastening main body section 11, and the protrusion section 114a and the coil spring 12 are locked. According to the present embodiment, in the fastening member 1, separation of the coil spring 12 from the fastening main body section 11 is suppressed by locking of the protrusion section 114a and the coil spring 12. Therefore, handleability of the fastening member 1 can be improved.

In the present embodiment, the intermediate brim section 112a that protrudes in the radial direction of the shaft section 112 is provided on the side of the shaft section 112 opposite to the head section 113 side, and in a case where the coil spring 12 is inclined with respect to the axis N, the intermediate brim section 112a is brought into contact with the coil spring 12. Therefore, release of the locking state of the coil spring 12 and the protrusion section 114a due to the inclination of the coil spring 12 is more reliably suppressed.

### (Modification Example 1)

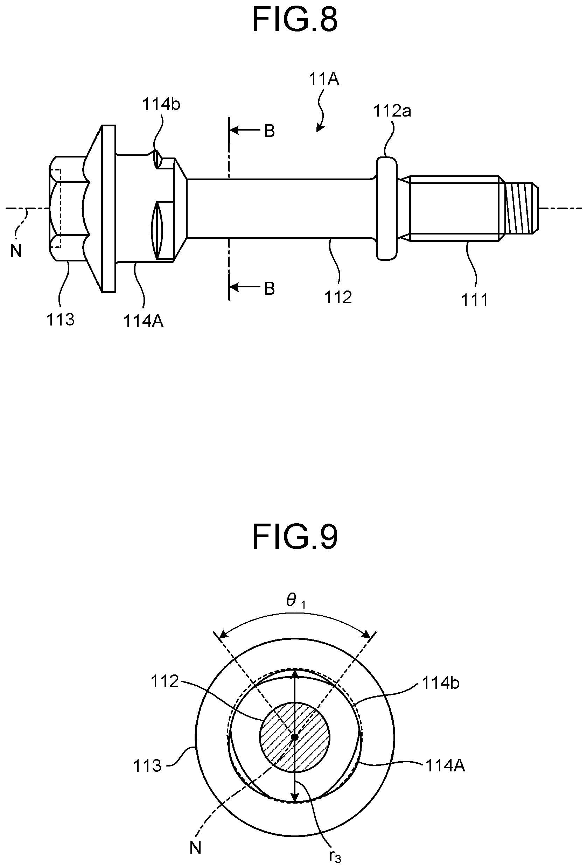

Next, Modification Example 1 of the present embodiment will be described with reference to FIGS. 8 and 9. FIG. 8 is a plan view illustrating a configuration of a fastening main body section of a fastening member according to Modification Example 1 of the embodiment of the present invention. FIG. 9 is a cross-sectional view taken along line B-B in FIG. 8. The fastening member according to Modification Example 1 includes a fastening main body section 11A instead of the fastening main body section 11 according to the embodiment. A configuration of a coil spring 12 is the same as in the embodiment. The same parts as those in the embodiment are represented by the same reference signs.

The fastening main body section 11A has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114A that is provided between the shaft section 112 and the head section 113. A diameter (maximum diameter) of the fastening main body section 11A in the direction perpendicular to the longitudinal direction is greater in an order of the threaded section 111, the shaft section 112, the stepped section 114A, and the head section 113.

The stepped section 114A has three protrusion sections 114b that protrude in the radial direction with respect to other portions of the stepped section 114A. The protrusion sections 114b are provided at equal intervals with respect to the circumferential direction of the stepped section 114A. That is, the two protrusion sections 114b in the stepped section 114B are formed at positions where 120° rotational symmetry is applied to the axis N, in a cross section with a plane perpendicular to the axis N direction as a cut section. As a forming range of the protrusion section 114b in the circumferential direction, a forming angle θ₁ with respect to the axis N is, for example, θ₁ = 75°. In the stepped section 114A, a diameter of portions excluding the protrusion section 114b is smaller than the inner diameter of the coil spring 12.

Here, a diameter r₃ of the protrusion section 114b is greater than the inner diameter r₃ of the coil spring 12. For example, as in the embodiment, the diameter r₃ is set to be equal to or greater than 101% and equal to or less than 105% with respect to the inner diameter r₁. The diameter r₃ of the protrusion sections 114b here is set to a diameter of a circumscribed circle (see a broken-line circle of FIG. 9) circumscribing the protrusion sections 114b.

In a state in which the coil spring 12 is assembled with the fastening main body section 11A, the coil spring 12 is locked to the protrusion sections 114b, and the coil spring 12 is retained to the fastening main body section 11.

The protrusion sections 114b are preferably positioned in the first to third turns of the coil spring 12 in the natural state from a viewpoint of achieving both anti-falling and securing of stretchability of the coil spring 12.

In Modification Example 1 described above, the protrusion sections 114b that protrude in the radial direction of the fastening main body section 11A are provided on the head section 113 side of the fastening main body section 11A, and the protrusion sections 114b and the coil spring 12 are locked. According to Modification Example 1, as in the embodiment, in the fastening member, separation of the coil spring 12 from the fastening main body section 11A is suppressed by locking of the protrusion section 114b and the coil spring 12. Therefore, handleability of the fastening member can be improved.

### (Modification Example 2)

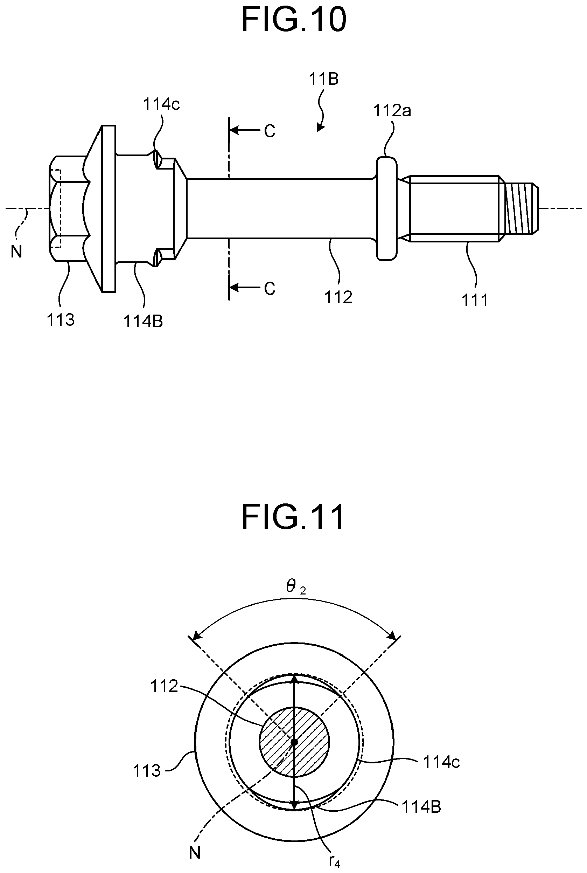

Next, Modification Example 2 of the present embodiment will be described with reference to FIGS. 10 and 11. FIG. 10 is a plan view illustrating a configuration of a fastening main body section of a fastening member according to Modification Example 2 of the embodiment of the present invention. FIG. 11 is a cross-sectional view taken along line C-C in FIG. 10. The fastening member according to Modification Example 2 includes a fastening main body section 11B instead of the fastening main body section 11 according to the embodiment. A configuration of a coil spring 12 is the same as in the embodiment. The same parts as those in the embodiment are represented by the same reference signs.

The fastening main body section 11B has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114B that is provided between the shaft section 112 and the head section 113. A diameter (maximum diameter) of the fastening main body section 11B in the direction perpendicular to the longitudinal direction is greater in an order of the threaded section 111, the shaft section 112, the stepped section 114B, and the head section 113.

The stepped section 114B has two protrusion sections 114c that protrude in the radial direction with respect to other portions of the stepped section 114B. The protrusion sections 114c are provided at an equal interval with respect to the circumferential direction of the stepped section 114B. That is, the two protrusion sections 114c in the stepped section 114B are formed at positions where 180° rotational symmetry is applied, in a cross section with the plane perpendicular to the axis N direction as a cut surface. As a forming range of the protrusion sections 114c in the circumferential direction, a forming angle θ₂ with respect to the axis N is, for example, θ₂ = 90°. In the stepped section 114B, a diameter of portions excluding the protrusion sections 114c is smaller than the inner diameter of the coil spring 12.

Here, a diameter r₄ of the protrusion sections 114c is greater than the inner diameter r₁ of the coil spring 12. For example, as in the embodiment, the diameter r₄ is set to be equal to or greater than 101% and equal to or less than 105% with respect to the inner diameter r₁. The diameter r₄ of the protrusion sections 114c here is set to a diameter of a circumscribed circle (see a broken-line circle of FIG. 11) circumscribing the protrusion sections 114c.

In a state in which the coil spring 12 is assembled with the fastening main body section 11B, the coil spring 12 is locked to the protrusion section 114b, and the coil spring 12 is retained to the fastening main body section 11B.

The protrusion sections 114c are preferably positioned in the first to third turns of the coil spring 12 in the natural state from a viewpoint of achieving both anti-falling and securing of stretchability of the coil spring 12.

In Modification Example 2 described above, the protrusion sections 114c that protrude in the radial direction of the fastening main body section 11B are provided on the head section 113 side of the fastening main body section 11B, and the protrusion sections 114c and the coil spring 12 are locked. According to Modification Example 2, as in the embodiment, in the fastening member, separation of the coil spring 12 from the fastening main body section 11B is suppressed by locking of the protrusion sections 114c and the coil spring 12. Therefore, handleability of the fastening member can be improved.

### (Modification Example 3)

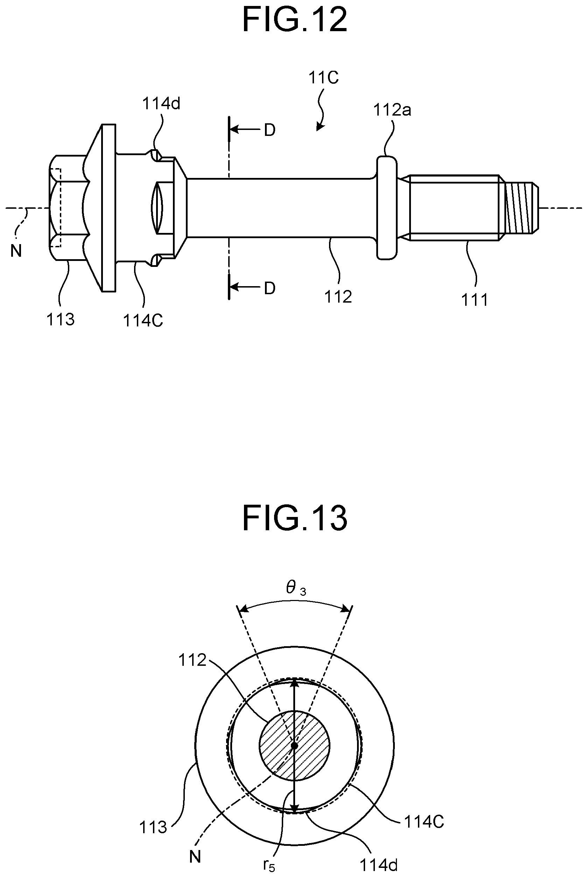

Next, Modification Example 3 of the present embodiment will be described with reference to FIGS. 12 and 13. FIG. 12 is a plan view illustrating a configuration of a fastening main body section of a fastening member according to Modification Example 3 of the embodiment of the present invention. FIG. 13 is a cross-sectional view taken along line D-D in FIG. 12. The fastening member according to Modification Example 3 includes a fastening main body section 11C instead of the fastening main body section 11 according to the embodiment. A configuration of a coil spring 12 is the same as in the embodiment. The same parts as those in the embodiment are represented by the same reference signs.

The fastening main body section 11C has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114C that is provided between the shaft section 112 and the head section 113. A diameter (maximum diameter) of the fastening main body section 11C in the direction perpendicular to the longitudinal direction is greater in an order of the threaded section 111, the shaft section 112, the stepped section 114C, and the head section 113.

The stepped section 114C has four protrusion sections 114d that protrude in the radial direction with respect to other portions of the stepped section 114C. The protrusion sections 114d are provided at equal intervals in the circumferential direction of the stepped section 114C. That is, the four protrusion sections 114d in the stepped section 114C are formed at positions where 90° rotational symmetry is applied, in a cross section with a plane perpendicular to the axis N direction as a cut section. As a forming range of the protrusion sections 114d in the circumferential direction, a forming angle θ₃ with respect to the axis N is, for example, θ₃ = 45°. In the stepped section 114C, a diameter of portions excluding the protrusion sections 114d is smaller than the inner diameter of the coil spring 12.

Here, a diameter r₅ of the protrusion sections 114d is greater than the inner diameter r₁ of the coil spring 12. For example, as in the embodiment, the diameter r₅ is set to be equal to or greater than 101% and equal to or less than 105% with respect to the inner diameter r₁. The diameter r₅ of the protrusion sections 114d here is set to a diameter of a circumscribed circle (see a broken-line circle of FIG. 13) circumscribing the protrusion sections 114d.

In a state in which the coil spring 12 is assembled with the fastening main body section 11C, the coil spring 12 is locked to the protrusion sections 114d, and the coil spring 12 is retained to the fastening main body section 11C.

The protrusion sections 114d are preferably positioned in the first to third turns of the coil spring 12 in the natural state from a viewpoint of achieving both anti-falling and securing of stretchability of the coil spring 12.

In Modification Example 3 described above, the protrusion sections 114d that protrude in the radial direction of the fastening main body section 11C are provided on the head section 113 side of the fastening main body section 11C, and the protrusion sections 114d and the coil spring 12 are locked. According to Modification Example 3, as in the embodiment, in the fastening member, separation of the coil spring 12 from the fastening main body section 11C is suppressed by locking of the protrusion sections 114d and the coil spring 12. Therefore, handleability of the fastening member can be improved.

### (Modification Example 4)

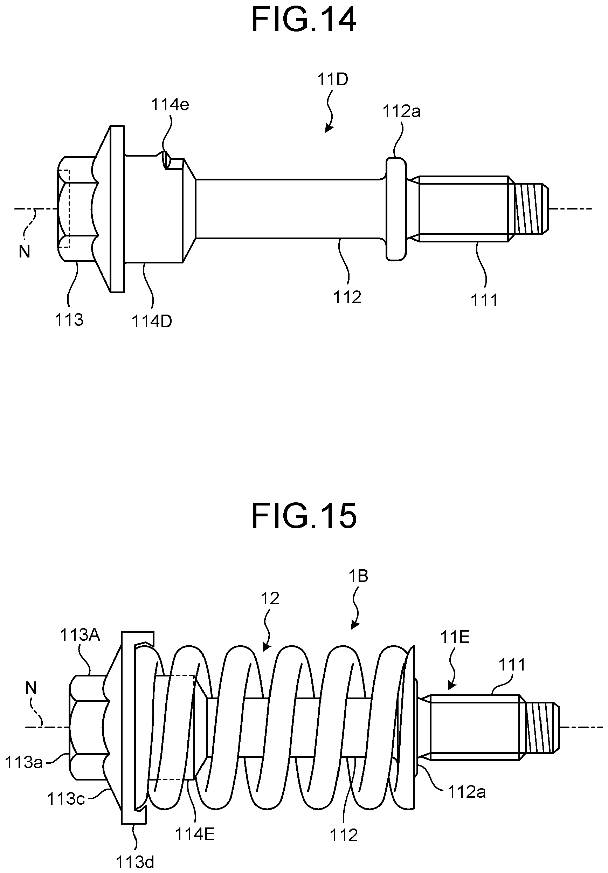

Next, Modification Example 4 of the present embodiment will be described with reference to FIG. 14. FIG. 14 is a plan view illustrating a configuration of a fastening main body section of a fastening member according to Modification Example 4 of the embodiment of the present invention. The fastening member according to Modification Example 4 includes a fastening main body section 11D instead of the fastening main body section 11 according to the embodiment. A configuration of a coil spring 12 is the same as in the embodiment. The same parts as those in the embodiment are represented by the same reference signs.

The fastening main body section 11D has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114D that is provided between the shaft section 112 and the head section 113. A diameter (maximum diameter) of the fastening main body section 11D in the direction perpendicular to the longitudinal direction is greater in an order of the threaded section 111, the shaft section 112, the stepped section 114D, and the head section 113.

The stepped section 114D has one protrusion section 114e that protrudes in the radial direction with respect to other portions of the stepped section 114D. The protrusion section 114e is provided in a part of the circumferential direction of the stepped section 114D. In the stepped section 114D, a diameter of portions excluding the protrusion section 114e is smaller than the inner diameter of the coil spring 12.

Here, a diameter of the protrusion section 114e is greater than the inner diameter (inner diameter r₁) of the coil spring 12. For example, as in the embodiment, the diameter of the protrusion section 114e is set to be equal to or greater than 101% and equal to or less than 105% with respect to the inner diameter r₁. The diameter of the protrusion section 114e here is set to a diameter of a circumscribed circle circumscribing the protrusion section 114e.

In a state in which the coil spring 12 is assembled with the fastening main body section 11D, the coil spring 12 is locked to the protrusion section 114e, and the coil spring 12 is retained to the fastening main body section 11.

The protrusion section 114e is preferably positioned at a position in the first to third turns of the coil spring 12 in the natural state from a viewpoint of achieving both anti-falling and securing of stretchability of the coil spring 12.

In Modification Example 4 described above, the protrusion section 114e that protrudes in the radial direction of the fastening main body section 11D is provided on the head section 113 side of the fastening main body section 11D, and the protrusion section 114d and the coil spring 12 are locked. According to Modification Example 4, as in the embodiment, in the fastening member, separation of the coil spring 12 from the fastening main body section 11D is suppressed by locking of the protrusion section 114e and the coil spring 12. Therefore, handleability of the fastening member can be improved.

### (Modification Example 5)

Next, Modification Example 5 of the present embodiment will be described with reference to FIG. 15. FIG. 15 is a plan view illustrating a configuration of a fastening main body section of a fastening member according to Modification Example 5 of the embodiment of the present invention. The fastening member according to Modification Example 5 includes a fastening main body section 11E instead of the fastening main body section 11 according to the embodiment. A configuration of a coil spring 12 is the same as in the embodiment. The same parts as those in the embodiment are represented by the same reference signs.

The fastening main body section 11E has a threaded section 111 that is to be screwed with a coupling target, a shaft section 112 that is connected to the threaded section 111 and has a columnar shape, a head section 113A that is provided on a side of the shaft section 112 opposite to the threaded section 111 side, and a stepped section 114E that is provided between the shaft section 112 and the head section 113A. A diameter (maximum diameter) of the fastening main body section 11E in the direction perpendicular to the longitudinal direction is greater in an order of the threaded section 111, the shaft section 112, the stepped section 114E, and the head section 113A.

The stepped section 114E has a pillar shape that extends in the axis N direction. The stepped section 114E has a diameter smaller than the inner diameter of the coil spring 12 and greater than a diameter of the shaft section 112.

The head section 113A has a hexagonal section 113a, a brim section 113c, and a locking section 113d that is provided in an end portion of the brim section 113c. A maximum diameter of the brim section 113c is greater than the inner diameter of the coil spring 12. A shape of the hexagonal section 113a of the head section 113 is not limited to a hexagonal shape.

The locking section 113d has a claw portion that protrudes in the axis N direction, and locks one end of the coil spring 12.

In a state in which the coil spring 12 is assembled with the fastening main body section 11E, the coil spring 12 is locked to the locking section 113d, and the coil spring 12 is retained to the fastening main body section 11.

In Modification Example 5 described above, the locking section 113d of the fastening main body section 11C is provided in the head section 113A of the fastening main body section 11D, and the locking section 113d and the coil spring 12 are locked. According to Modification Example 5, as in the embodiment, in the fastening member, separation of the coil spring 12 from the fastening main body section 11E is suppressed by locking of the locking section 113d and the coil spring 12. Therefore, handleability of the fastening member can be improved.

### (Modification Example 6)

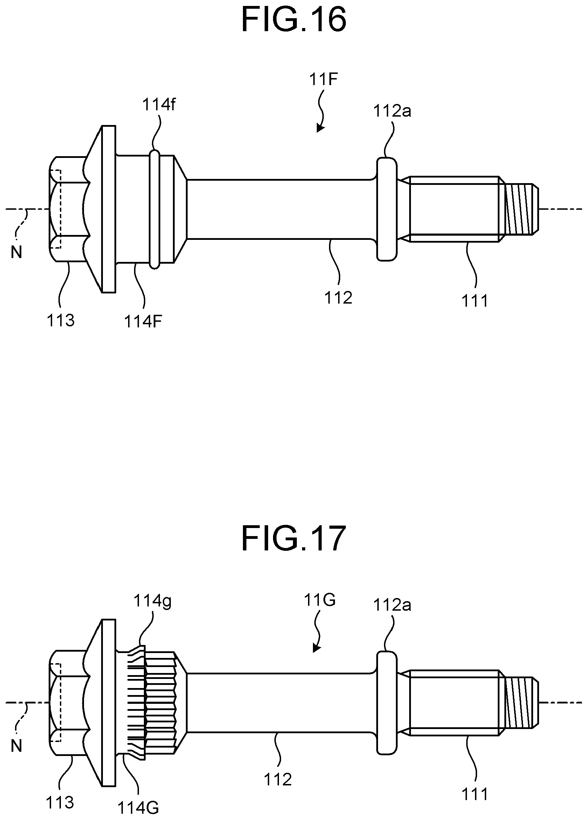

Next, Modification Example 6 of the present embodiment will be described with reference to FIG. 16. FIG. 16 is a plan view illustrating a configuration of a fastening main body section of a fastening member according to Modification Example 6 of the embodiment of the present invention. The fastening member according to Modification Example 6 includes a fastening main body section 11F instead of the fastening main body section 11 according to the embodiment. A configuration of a coil spring 12 is the same as in the embodiment. The same parts as those in the embodiment are represented by the same reference signs.

The fastening main body section 11F has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114F that is provided between the shaft section 112 and the head section 113. A diameter (maximum diameter) of the fastening main body section 11F in the direction perpendicular to the longitudinal direction is greater in an order of the threaded section 111, the shaft section 112, the stepped section 114F, and the head section 113.

The stepped section 114F has a protrusion section 114f that protrudes in the radial direction with respect to other portions of the stepped section 114F. The protrusion section 114f is provided separately from the stepped section 114F, and has an annular shape along one cycle in the circumferential direction of the stepped section 114F. A diameter of the stepped section 114F excluding the protrusion section 114f is smaller than the inner diameter of the coil spring 12.

Here, a diameter of the protrusion section 114f is greater than the inner diameter (inner diameter r₁) of the coil spring 12. For example, as in the embodiment, the diameter of the protrusion section 114f is set to be equal to or greater than 101% and equal to or less than 105% with respect to the inner diameter r₁. The diameter of the protrusion section 114f here is set to a diameter of a circumscribed circle circumscribing the protrusion section 114f.

In a state in which the coil spring 12 is assembled with the fastening main body section 11F, the coil spring 12 is locked to the protrusion section 114f, and the coil spring 12 is retained to the fastening main body section 11F.

The protrusion section 114f is preferably positioned in the first to third turns of the coil spring 12 in the natural state from a viewpoint of achieving both anti-falling and securing of stretchability of the coil spring 12.

In Modification Example 6 described above, the protrusion section 114f that protrudes in the radial direction of the fastening main body section 11F is provided on the head section 113 side of the fastening main body section 11F, and the protrusion section 114f and the coil spring 12 are locked. According to Modification Example 6, as in the embodiment, in the fastening member, separation of the coil spring 12 from the fastening main body section 11F is suppressed by locking of the protrusion section 114f and the coil spring 12. Therefore, handleability of the fastening member can be improved.

In Modification Example 6, although the protrusion section 114f (O-ring) having an annular shape has been described as an example, a protrusion section (C-ring) that is partially opened to have an arc shape can be employed.

### (Modification Example 7)

Next, Modification Example 7 of the present embodiment will be described with reference to FIG. 17. FIG. 17 is a plan view illustrating a configuration of a fastening main body section of a fastening member according to Modification Example 7 of the embodiment of the present invention. The fastening member according to Modification Example 7 includes a fastening main body section 11G instead of the fastening main body section 11 according to the embodiment. A configuration of a coil spring 12 is the same as in the embodiment. The same parts as those in the embodiment are represented by the same reference signs.

The fastening main body section 11G has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114G that is provided between the shaft section 112 and the head section 113. A diameter (maximum diameter) of the fastening main body section 11G in the direction perpendicular to the longitudinal direction is greater in an order of the threaded section 111, the shaft section 112, the stepped section 114G, and the head section 113.

The stepped section 114G has one protrusion section 114g that protrudes in the radial direction with respect to other portions of the stepped section 114G. The protrusion section 114g is an annular protrusion that is formed along one cycle in the circumferential direction of the stepped section 114G and extends in the circumferential direction. The protrusion section 114g is formed by pushing out a part of a side surface having a serrated shape formed by serration processing, for example. That is, the protrusion section 114g has a serrated shape that is sequentially widened along the axis N direction. In the stepped section 114G, a diameter of portions excluding the protrusion section 114g is smaller than the inner diameter of the coil spring 12.

Here, a maximum diameter of the protrusion section 114g is greater than the inner diameter (inner diameter r₁) of the coil spring 12. For example, as in the embodiment, a diameter of the protrusion section 114g is set to be equal to or greater than 101% and equal to or less than 105% with respect to the inner diameter r₁. The diameter of the protrusion section 114g here is set to a diameter of a circumscribed circle circumscribing the protrusion section 114g.

In a state in which the coil spring 12 is assembled with the fastening main body section 11G, the coil spring 12 is locked to the protrusion section 114g, and the coil spring 12 is retained to the fastening main body section 11G.

The protrusion section 114g is preferably positioned in the first to third turns of the coil spring 12 in the natural state from a viewpoint of achieving both anti-falling and securing of stretchability of the coil spring 12.

In Modification Example 7 described above, the protrusion section 114g that protrudes in the radial direction of the fastening main body section 11G is provided on the head section 113 side of the fastening main body section 11G, and the protrusion section 114g and the coil spring 12 are locked. According to Modification Example 7, as in the embodiment, in the fastening member, separation of the coil spring 12 from the fastening main body section 11G is suppressed by locking of the protrusion section 114g and the coil spring 12. Therefore, handleability of the fastening member can be improved.

### (Modification Example 8)

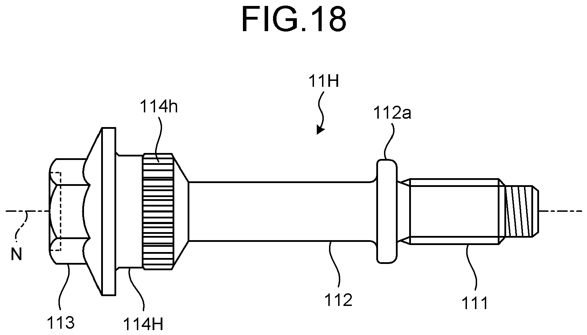

Next, Modification Example 8 of the present embodiment will be described with reference to FIG. 18. FIG. 18 is a plan view illustrating a configuration of a fastening main body section of a fastening member according to Modification Example 8 of the embodiment of the present invention. The fastening member according to Modification Example 8 includes a fastening main body section 11H instead of the fastening main body section 11 according to the embodiment. A configuration of a coil spring 12 is the same as in the embodiment. The same parts as those in the embodiment are represented by the same reference signs.

The fastening main body section 11H has a threaded section 111 that is to be screwed with a coupling target, a shaft section 112 that is connected to the threaded section 111 and has a columnar shape, a head section 113 that is provided on a side of the shaft section 112 opposite to the threaded section 111 side, and a stepped section 114H that is provided between the shaft section 112 and the head section 113. A diameter (maximum diameter) of the fastening main body section 11H in the direction perpendicular to the longitudinal direction is greater in an order of the threaded section 111, the shaft section 112, the stepped section 114H, and the head section 113.

The stepped section 114H has one protrusion section 114h that protrudes in the radial direction with respect to other portions of the stepped section 114H. The protrusion section 114h is an annular protrusion that is formed along one cycle in the circumferential direction of the stepped section 114H and extends in the circumferential direction. The protrusion section 114h has a serrated shape that is formed by serration processing, for example. In the stepped section 114H, a diameter of portions excluding the protrusion section 114h is smaller than the inner diameter of the coil spring 12.

Here, a maximum diameter of the protrusion section 114h is greater than the inner diameter (inner diameter r₁) of the coil spring 12. For example, as in the embodiment, a diameter of the protrusion section 114h is set to be equal to or greater than 101% and equal to or less than 105% with respect to the inner diameter r₁. The diameter of the protrusion section 114h here is set to a diameter of a circumscribed circle circumscribing the protrusion section 114h.

In a state in which the coil spring 12 is assembled with the fastening main body section 11H, the coil spring 12 is locked to the protrusion section 114h, and the coil spring 12 is retained to the fastening main body section 11H.

The protrusion section 114h is preferably positioned in the first to third turns of the coil spring 12 in the natural state from a viewpoint of achieving both anti-falling and securing of stretchability of the coil spring 12.

In Modification Example 8 described above, the protrusion section 114h that protrudes in the radial direction of the fastening main body section 11H is provided on the head section 113 side of the fastening main body section 11H, and the protrusion section 114h and the coil spring 12 are locked. According to Modification Example 8, as in the embodiment, in the fastening member, separation of the coil spring 12 from the fastening main body section 11H is suppressed by locking of the protrusion section 114h and the coil spring 12. Therefore, handleability of the fastening member can be improved.

In the embodiment and the modification examples, although an example where the fastening main body section has the intermediate brim section 112a has been described, for example, a configuration in which the intermediate brim section 112a is not provided may be made as long as separation of the coil spring 12 from the fastening main body section 11 can be suppressed by the protrusion section 114a.

In addition to the protrusion section or the locking section illustrated in the embodiment and the modification examples, a pin for retaining may be provided in the stepped section to retain the coil spring to the fastening main body section, a recess portion may be formed in the stepped section to rivet the coil spring and to fix the coil spring to the stepped section, or the coil spring may be welded to the stepped section. In a case where the coil spring is riveted or welded to the stepped section, the rotation of the coil spring with respect to the fastening main body section is restricted.

Although an embodiment for carrying out the present invention has been described above, the present invention is not intended to be limited only by the above-described embodiment.

In this way, the present invention may include various embodiments and the like that are not described herein, and various design changes and the like can be made without departing from the technical ideas specified by the appended claims.

### Industrial Applicability

As described above, the fastening member according to the present invention is suitable for improving workability in connecting pipes.

### Reference Signs List

1 FASTENING MEMBER
2 MUFFLER
3 ENGINE
11, 11A to 11H FASTENING MAIN BODY SECTION
12 COIL SPRING
21a, 22a FLANGE
111 THREADED SECTION
112 SHAFT SECTION
112a INTERMEDIATE BRIM SECTION
113, 113A HEAD SECTION
113a HEXAGONAL SECTION
113b, 113c BRIM SECTION
113d LOCKING SECTION
114, 114A to 114H STEPPED SECTION
114a to 114h PROTRUSION SECTION

## Claims

1. A fastening member comprising:
a fastening main body section; and
a coil spring assembled with the fastening main body section, wherein
the fastening main body section includes
a threaded section configured to be coupled to a coupling target,
a shaft section extending from one end of the threaded section,
a head section provided on a side of the shaft section opposite to the threaded section side, the head section having a maximum diameter greater than an inner diameter of the coil spring,
a stepped section provided between the shaft section and the head section, and
a locking section provided in the stepped section or the head section and configured to lock the coil spring, and
the coil spring is configured to
be inserted into the shaft section and the stepped section, and
be locked to the locking section.

2. The fastening member according to claim 1, wherein the shaft section includes
a threaded section configured to be screwed to another fastening member in an end portion on a side opposite to the stepped section side, and
an intermediate brim section positioned between the stepped section and the shaft section and at least partially inside the coil spring and configured to protrude with a diameter smaller than the inner diameter of the coil spring.

3. The fastening member according to claim 1 or 2, wherein the locking section is an annular protrusion extending in a circumferential direction of the stepped section.

4. The fastening member according to claim 1 or 2, wherein the locking section is one or a plurality of protrusions intermittently provided in a circumferential direction of the stepped section.

5. The fastening member according to claim 4, wherein the plurality of protrusions are positioned at equal intervals in the circumferential direction of the stepped section.

6. The fastening member according to claim 1, wherein the locking section is provided separately from the stepped section and extends in a circumferential direction of the stepped section.

7. The fastening member according to claim 1, wherein the locking section is provided in the head section and includes a claw portion configured to be locked with the coil spring.

8. The fastening member according to any one of claims 1 to 6, wherein
the coil spring is formed by winding a wire, and
a protrusion section of the stepped section is provided at a position corresponding to a third turn or less of the coil spring from the head section side in a longitudinal direction of the fastening main body section.

9. The fastening member according to any one of claims 1 to 8, wherein the coil spring is configured to freely rotate with respect to the fastening main body section.

10. The fastening member according to any one of claims 1 to 9, wherein the fastening member is configured to form a part of an exhaust pipe spherical joint structure for fastening a first pipe and a second pipe configuring an exhaust pipe of a vehicle.
